# EUROPÄISCHE PATENTANMELDUNG

(11) **EP 3 354 992 A1**
(43) Veröffentlichungstag der Anmeldung: **01.08.2018**
(21) Anmeldenummer: 18153129.4
(22) Anmeldetag: 24.01.2018
(51) Int. Cl.: F24D 11/00, F24D 10/00, F24D 19/10

(54) **WÄRMEVERTEILNETZ UND VERFAHREN ZUR WÄRMEVERTEILUNG**

(30) Priorität: 25.01.2017 DE 102017201199
(71) Anmelder: Fraunhofer-Gesellschaft zur Förderung der angewandten Forschung e.V., 80686 München (DE)
(72) Erfinder: Elci, Mehmet, 79106 Freiburg (DE)
(74) Vertreter: Friese Goeden Patentanwälte PartGmbB

(57) **Zusammenfassung**

Die Erfindung betrifft ein Wärmeverteilnetz (5) mit zumindest einer Vorlaufleitung (51) und zumindest einer Rücklaufleitung (52) und mit zumindest einem Verbraucher (1) und zumindest einer Heiz- oder Kühlstation (55), wobei der Verbraucher (1) eine Einrichtung zur Erfassung eines Wärmebedarfs enthält, welche dazu eingerichtet ist, den Wärmebedarf an die Heiz- oder Kühlstation (55) zu melden, wobei diese dazu eingerichtet ist, in einem ersten Verfahrensschritt eine erste vorgebbare Menge eines Wärmeträgers aus der Rücklaufleitung (52) über die Vorlaufleitung (51) zum Verbraucher (1) zu fördern, wobei dem Wärmeträger eine erste Wärmemenge zugeführt oder entnommen wird und im Anschluss daran in einem zweiten Verfahrensschritt eine zweite vorgebbare Menge des Wärmeträgers aus der Rücklaufleitung (52) über die Vorlaufleitung (51) zum Verbraucher (1) zu fördern, wobei dem Wärmeträger eine zweite, geringere Wärmemenge zugeführt oder entnommen wird. Weiterhin betrifft die Erfindung ein Verfahren zur Wärmeverteilung innerhalb eines Wärmeverteilnetzes.

## Beschreibung

Die Erfindung betrifft ein Wärmeverteilnetz mit zumindest einer Vorlaufleitung und zumindest einer Rücklaufleitung und mit zumindest einem Verbraucher und zumindest einer Heiz oder Kühlstation. Weiterhin betrifft die Erfindung ein Verfahren zur Wärmeverteilung innerhalb eines Wärmeverteilnetzes, welches zumindest eine Vorlaufleitung und zumindest eine Rücklaufleitung und zumindest einem Verbraucher und zumindest eine Heiz- oder Kühlstation enthält. Vorrichtungen und Verfahren der eingangs genannten Art können zur Klimatisierung von Gebäuden mittels Fernwärme oder Fernkälte eingesetzt werden. Dabei unterscheiden sich beide Anwendungsfälle lediglich durch die Richtung des Wärmeflusses, nämlich entweder von der Zentrale zum Gebäude oder vom Gebäude zur Zentrale. Diese wirkt somit entweder als Wärmequelle oder als Wärmesenke.

Aus Bernd Glück: Heizwassernetze für Wohn- und Industriegebiete, Berlin: VEB Verlag für Bauwesen 1984 und Frankfurt/M.: Verlags- und Wirtschaftsgesellschaft der Elektrizitätswerke mbH 1985, ISBN 3-8022-0095-0, ist bekannt, ein Wärmeverteilnetz als Rohrleitungsnetz aufzubauen und zu betreiben. In den Rohrleitungen zirkuliert ein flüssiger Wärmeträger, meist Wasser, welches in einer Heizstation erwärmt und zu den Verbrauchern transportiert wird. In den Verbrauchern wird dem Wärmeträger Wärme entnommen und zu Heizzwecken des jeweiligen Gebäudes verwendet. der auf diese Weise abgekühlte Wärmeträger zirkuliert zurück zur Heizstation und wird dort erneut erwärmt. Auf diese Weise können kleinere Gemeinden oder Stadtviertel zentral mit Heizwärme versorgt werden.

Dieses bekannte Wärmeverteilnetz weist jedoch den Nachteil auf, dass auch in Zeiten geringer Wärmeabnahme, beispielsweise im Sommer, Wärmeträger zirkuliert werden muss. Ein vollständiges Abstellen des Wärmeverteilnetzes verbietet sich, da in den Sommermonaten zwar die Wärmeanforderung der Verbraucher reduziert ist, aber nicht vollständig entfällt, beispielsweise zur Brauchwassererwärmung. Gleichwohl weist das Wärmeverteilnetz aufgrund der geringen Wärmeabnahme vergleichsweise hohe Verluste auf, welche den Gesamtwirkungsgrad im Jahresmittel reduzieren.

Zur Lösung dieses Problems schlägt der Stand der Technik beispielsweise die Wärmedämmungen der Rohre des Wärmeverteilnetzes vor, um auf diese Weise die Wärmeverluste zu reduzieren. Alternativ oder zusätzlich kann das Wärmeverteilnetz temporär abgeschaltet werden. Die einzelnen Verbraucher weisen in diesem Fall Speicher auf, welche eine gewisse Wärmemenge zwischenspeichern, um die Abschaltzeit des Wärmeverteilnetzes zu überbrücken. Auch in diesem Fall muss das Wärmeverteilnetz jedoch wieder in Betrieb genommen werden, wenn der Verbraucher mit dem höchsten Wärmebedarf oder der geringsten Speicherkapazität einen Wärmebedarf anmeldet. Dann muss jedoch erst das in den Rohrleitungen befindliche kalte Wärmeträger vollständig erwärmt bzw. ausgetauscht werden, bis Wärme beim betreffenden Verbraucher ankommt. Mit der Länge der Rohrleitungen des Wärmeverteilnetzes steigt damit die Gefahr, dass Wärme nicht hinreichend schnell geliefert werden kann und damit die Versorgungssicherheit gefährdet wird.

Ausgehend vom Stand der Technik liegt der Erfindung daher die Aufgabe zugrunde, ein Wärmeverteilnetz und ein Verfahren zur Wärmeverteilung anzugeben, welches bei unveränderter Versorgungssicherheit geringere Wärmeverluste in Schwachlastzeiten ermöglicht.

Die Aufgabe wird erfindungsgemäß durch eine Vorrichtung gemäß Anspruch 1 und ein Verfahren nach Anspruch 6 gelöst. Vorteilhafte Weiterbildungen der Erfindung finden sich in den Unteransprüchen.

Erfindungsgemäß wird ein Wärmeverteilnetz mit zumindest einer Vorlaufleitung und zumindest einer Rücklaufleitung vorgeschlagen. Das Wärmeverteilnetz ist dazu eingerichtet, einen Wärmeträger zu zirkulieren, um auf diese Weise Wärme von einem Punkt des Wärmeverteilnetzes zu einem anderen Punkt des Wärmeverteilnetzes zu übertragen. Auf diese Weise kann einem Verbraucher Nutzwärme zugeführt werden oder überschüssige Wärme abgeführt werden, beispielsweise zur Klimatisierung eines Gebäudes oder zur Kühlung von Maschinen oder Produktionsanlagen. Die vorliegende Beschreibung beschreibt die Erfindung anhand eines Fernwärmenetzes. Dies dient jedoch lediglich zur Erläuterung der vorliegenden Erfindung und soll den Schutzgegenstand nicht auf ein Fernwärmenetz beschränken. Auch die zentrale Bereitstellung von "Fernkälte" stellt eine Anwendung der Erfindung dar.

Der Wärmeträger, welcher in der Vorlaufleitung zum Verbraucher transportiert und von dort über die Rücklaufleitung wieder abgeführt wird, kann in einigen Ausführungsformen der Erfindung ein flüssiges Medium sein, beispielsweise ein Heiz- oder Kühlwasser oder ein Thermoöl. In anderen Ausführungsformen der Erfindung kann der Wärmeträger am Ort des Verbrauchers einen Phasenwechsel durchlaufen, um auf diese Weise latente Wärme zu- oder abzuführen. Beispielsweise kann der Wärmeträger Dampf sein, welcher am Ort des Verbrauchers kondensiert und auf diese Weise die Verdampfungswärme freisetzt.

Der Verbraucher kann beispielsweise eine Fernwärmeübergabestation eines Gebäudes sein oder eine solche enthalten. Weiterhin enthält das Wärmeverteilnetz zumindest eine Heiz- oder Kühlstation, welche dazu eingerichtet ist, den Wärmeträger aus der Rücklaufleitung entgegenzunehmen, diesem im Falle eines Fernwärmenetzes Wärme zuzuführen und den Wärmeträger dann mit einer zugeordneten Fördereinrichtung, beispielsweise einer Pumpe, über die Vorlaufleitung zu den Verbrauchern zu transportieren. Im Falle eines "Fernkältenetzes" wird dem Wärmeträger aus der Rücklaufleitung entsprechend Wärme entzogen, ehe dieser wieder über die Vorlaufleitung zu den Verbrauchern gelangt.

In einigen Ausführungsformen der Erfindung kann eine Mehrzahl von Heiz- oder Kühlstationen und/oder eine Mehrzahl von Verbrauchern vorhanden sein. Auch können die Verbraucher in einigen Ausführungsformen einen Teil der benötigten Wärme selbst erzeugen, beispielsweise über Solarkollektoren.

Erfindungsgemäß wird nun vorgeschlagen, in Schwachlastzeiten die Heiz- oder Kühlstation abzuschalten. Beispielsweise kann dies im Sommer der Fall sein, wenn keine Heizwärme im Gebäude benötigt wird. Dies führt dazu, dass der Wärmeträger in der Vorlaufleitung abkühlt.

Sofern nun einzelne Verbraucher gleichwohl einen Wärmebedarf anmelden, wird in einem ersten Verfahrensschritt eine erste vorgebbare Menge eines Wärmeträgers aus der Rücklaufleitung über die Vorlaufleitung zum Verbraucher gefördert, wobei dem Wärmeträger eine erste Wärmemenge zugeführt wird. Im Anschluss daran wird in einem zweiten Verfahrensschritt eine zweite vorgebbare Menge des Wärmeträgers aus der Rücklaufleitung über die Vorlaufleitung zum Verbraucher gefördert, wobei dem Wärmeträger eine zweite, geringere Wärmemenge zugeführt wird. Die zweite Wärmemenge kann auch null sein, d.h. der Wärmeträger aus der Rücklaufleitung wird ohne Wärmezufuhr in die Vorlaufleitung gefördert. Dieses Merkmal hat die Wirkung, dass anders als bei bekannten Wärmeverteilnetzen am Ende der Wärmelieferung kein warmer Wärmeträger ungenutzt in der Vorlaufleitung verbleibt und dadurch der Wirkungsgrad steigt. Da die Vorlauftemperatur ausgehend von einem niedrigen Niveau zu Beginn der Wärmelieferung auf ein höheres Niveau im ersten Verfahrensschritt ansteigt und dann im zweiten Verfahrensschritt wieder abfällt, kann die Wärmelieferung an den Verbraucher auch als Wärmepuls bezeichnet werden. Dadurch verbleibt im Anschluss an die Lieferung der vorgesehenen Wärmemenge an den Verbraucher und dem damit einhergehenden Stoppen der Zirkulation, keine Wärme ungenutzt in der Vorlaufleitung.

Erfindungsgemäß wird weiter vorgeschlagen, dass der Verbraucher eine Einrichtung zur Erfassung eines Wärmebedarfs enthält und damit der Wärmebedarf bestimmt und unter Berücksichtigung von Transportverlusten an die Heizzentrale weitergegeben wird, so dass diese die zu liefernde Wärmemenge genau bestimmen kann und Verluste minimiert werden.

In einigen Ausführungsformen der Erfindung enthält der Verbraucher optional zumindest einen zugeordneten Speicher, welcher aus dem Wärmeverteilnetz zugeführte Wärme zwischenspeichern kann. Hierzu kann der Speicher beispielsweise einen thermisch isolierten Behälter aufweisen, in welchem eine Teilmenge des flüssigen Wärmeträgers aus dem Wärmeverteilnetz zwischengespeichert werden kann. In anderen Ausführungsformen der Erfindung kann der Speicher ein Phasenwechselmaterial enthalten oder daraus bestehen. Dieses kann durch Wärme aus dem Wärmeverteilnetz verflüssigt werden und beim Erstarren Wärme abgeben, welche vom Verbraucher beispielsweise zur Brauchwassererwärmung oder zur Beheizung verwendbar ist. Das Phasenwechselmaterial kann in einigen Ausführungsformen der Erfindung Paraffin und/oder ein Salzhydrat enthalten. Hierdurch kann die Abschaltzeit des Wärmeverteilnetzes verlängert sein.

In einigen Ausführungsformen der Erfindung enthält der Speicher optional zumindest einen zugeordneten Temperatursensor, mit welchem der Beladungszustand des Speichers bestimmbar ist. Dieser Wert kann dann bei einer Wärmeanforderung des Verbrauchers und/oder bei der Optimierung der Wärmelieferung berücksichtigt werden.

In einigen Ausführungsformen der Erfindung enthält die Heiz- oder Kühlstation zumindest ein Bypassventil, mit welchem die Rücklaufleitung und die Vorlaufleitung verbindbar sind, wobei das Bypassventil dazu eingerichtet ist, im ersten Verfahrensschritt geöffnet und im zweiten Verfahrensschritt geschlossen zu werden. Dieses Merkmal hat die Wirkung, dass der Wärmeträger aus der Rücklaufleitung ohne bzw. nahezu ohne Wärmezufuhr in die Vorlaufleitung gefördert werden kann. Der kalte Wärmeträger aus der Rücklaufleitung führt daher nicht zur Abkühlung innerer Bauteile der Heiz- oder Kühlstation, so dass Wärmeverluste bei der Wiederinbetriebnahme verringert werden.

In einigen Ausführungsformen der Erfindung kann zumindest ein Verbraucher zumindest einen Temperatursensor enthalten, mit welchem die Temperatur des Wärmeträgers in der Vorlaufleitung bestimmbar ist. Dieser Temperatursensor kann dazu verwendet werden, zumindest eine Förderpumpe und/oder zumindest ein Absperrventil und/oder zumindest ein Bypassventil anzusteuern, um auf diese Weise einen unerwünschten Wärmeaustrag aus dem Verbraucher zu vermeiden oder zu reduzieren und dadurch Wärmeverluste weiter zu minimieren.

In einigen Ausführungsformen der Erfindung kann der zweite Verfahrensschritt beendet werden, wenn die Vorlauftemperatur am Verbraucher unter einen vorgebbaren Schwellenwert gefallen ist. In diesem Fall kann aus der Vorlaufleitung keine weitere Wärme entnommen werden, so dass zur Vermeidung von Wärmeverlusten kein weiterer Wärmeträger durch den Verbraucher strömen sollte.

In einigen Ausführungsformen der Erfindung kann zumindest ein Verbraucher weiterhin einen Durchflussmesser enthalten, mit welchem der Durchfluss des Wärmeträgers in zumindest einer Leitung bestimmbar ist. Im Zusammenwirken mit der Temperatur des Wärmeträgers kann auf diese Weise die einem Verbraucher zu- oder abgeführte Wärmemenge bestimmt werden. Dies erlaubt eine nochmals verbesserte Steuerung oder Regelung der Wärmeverteilung.

In einigen Ausführungsformen der Erfindung kann die erste vorgebbare Menge des Wärmeträgers aus einer Wärmeanforderung des Verbrauchers, einem Transportverlust und der Temperatur des Wärmeträgermediums bestimmt werden. Hieraus kann die Dauer des ersten Verfahrensschrittes unter Berücksichtigung der Förderleistung und der Vorlauftemperatur bestimmt werden.

In einigen Ausführungsformen der Erfindung kann die Heiz- oder Kühlstation einen Wärmemengenmesser enthalten. Hierdurch kann der Zeitpunkt des Übergangs vom ersten Verfahrensschritt zum zweiten Verfahrensschritt genau bestimmt werden, nämlich der Zeitpunkt, in welchem die vom Verbraucher angeforderte Wärmemenge unter Berücksichtigung von Verlusten geliefert wurde.

In einigen Ausführungsformen der Erfindung kann das Wärmeverteilnetz weiterhin eine Steuer- oder Regeleinrichtung enthalten, welche dazu eingerichtet ist, elektrische Signale zu erzeugen, mit welchen der Betriebszustand des Verbrauchers und/oder der Heiz- oder Kühlstation beeinflussbar sind.

Die Steuer- oder Regeleinrichtung kann zentral realisiert sein, beispielsweise in einem Rechenzentrum oder als Bestandteil der Heiz- oder Kühlstation. In diesem Fall kann die Steuer- oder Regeleinrichtung mit entsprechenden Datenleitungen mit den Einrichtungen der Verbraucher verbunden sein, um diese entsprechend dem gewünschten Betriebszustand anzusteuern.

In anderen Ausführungsformen der Erfindung kann die Steuer- oder Regeleinrichtung dezentral realisiert sein. Dabei sind in jedem Verbraucher Teile der Steuer- oder Regeleinrichtung vorhanden, welche der Erfassung von Messwerten und der Ansteuerung von Aktoren des jeweiligen Verbrauchers dienen. Die Steuer- oder Regeleinrichtung eines jeden Verbrauchers ist mit der betreffenden Steuer- oder Regeleinrichtung anderer Verbraucher über Datenleitungen verbunden, um Informationen über aktuelle oder einzunehmende Betriebszustände auszutauschen. Hierdurch kann die Steuer- oder Regeleinrichtung eines Verbrauchers auch den Betriebszustand eines benachbarten Verbrauchers beeinflussen.

In wiederum einer anderen Ausführungsform der Erfindung kann die Steuer- oder Regeleinrichtung sowohl zentrale als auch dezentrale Komponenten aufweisen. Dabei sind die einzelnen Steuer- oder Regeleinrichtungen der jeweiligen Verbraucher mit der zentralen Komponente der Steuer- oder Regeleinrichtung vernetzt, so dass zentrale und dezentrale Komponenten zusammen den konkreten Betriebszustand der Verbraucher und optional der Heiz- oder Kühlstation beeinflussen.

Die Steuer- oder Regeleinrichtung kann in an sich bekannter Weise als Hard- oder Software realisiert sein. Hierzu kann die Steuer- oder Regeleinrichtung zumindest einen Mikroprozessor, einen Mikrokontroller, einen programmierbaren Logik-Chip sowie ein Computerprogramm enthalten, welches die gewünschten Regelvorgänge ausführt, wenn dieses auf einem Mikroprozessor ausgeführt wird. In einigen Ausführungsformen der Erfindung betrifft diese daher einen Datenträger mit darauf gespeicherten Daten oder eine für die Übersendung über ein Datennetz geeignete, Daten repräsentierende Signalfolge, wobei die Daten ein Computerprogramm repräsentieren, welches ein Steuer- oder Regelverfahren ausführt, wenn das Computerprogramm auf einem Mikroprozessor läuft.

Die Datenleitungen können als Kabelverbindung realisiert sein, beispielsweise über eine Telefonleitung, ein Netzwerkkabel oder einen Lichtwellenleiter. In anderen Ausführungsformen der Erfindung kann es sich um eine drahtlose Datenverbindung wie WLAN, LTE, UMTS und/oder GSM handeln.

In einigen Ausführungsformen der Erfindung kann der Verbraucher ein Bypassventil und einen Temperatursensor zur Messung der Vorlauftemperatur aufweisen, wobei das Bypassventil die Vorlaufleitung mit der Rücklaufleitung verbindet und das Bypassventil geöffnet ist, wenn die Vorlauftemperatur unterhalb eines vorgebbaren Schwellenwertes liegt. Dies vermeidet, dass der zunächst zum Verbraucher strömende kalte Wärmeträger weitere Wärme aus dem Verbraucher austrägt. Erst wenn durch ansteigende Vorlauftemperatur detektiert wird, dass die Wärme der Heizzentrale ankommt, wird das Bypassventil geschlossen und der Wärmeträger durch den Verbraucher geleitet.

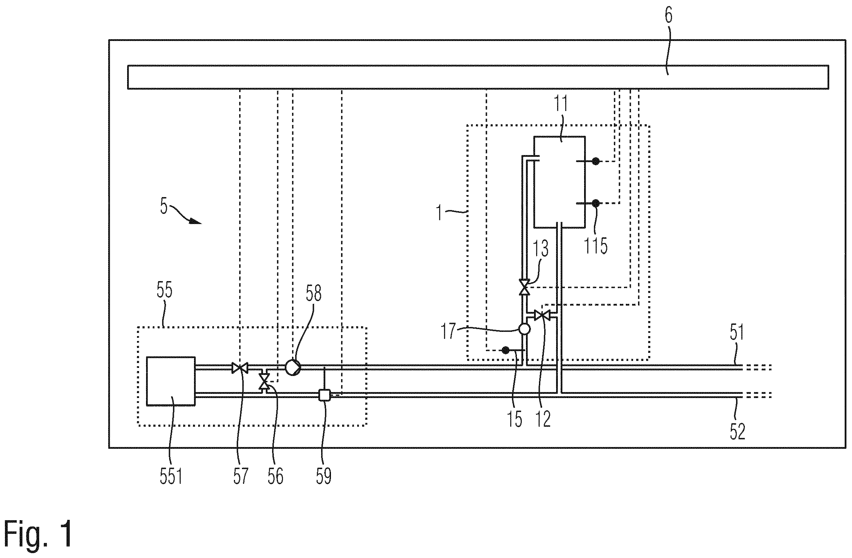

Nachfolgend soll die Erfindung anhand einer Figur und Ausführungsbeispielen näher erläutert werden. Dabei zeigt
- Fig. 1: eine erste Ausführungsform eines Wärmeverteilnetzes gemäß der vorliegenden Erfindung.

Anhand von Fig. 1 wird eine Ausführungsform eines erfindungsgemäßen Wärmeverteilnetzes 5 erläutert. Das Wärmeverteilnetz 5 enthält zumindest einen Verbraucher 1, sowie eine Heiz- oder Kühlstation 55. Die nachfolgende Beschreibung beschränkt sich aus Gründen der Übersichtlichkeit auf ein Fernwärmenetz. Somit wird die zentrale Heiz- oder Kühlstation nachfolgend als Heizstation 55 bezeichnet. Dies soll selbstverständlich die Verwendung einer Wärmesenke eines Fernkältenetzes nicht ausschließen.

Das Wärmeverteilnetz 5 weist eine Vorlaufleitung 51 und eine Rücklaufleitung 52 auf. Vorlauf- und Rücklaufleitung 51 und 52 können beispielsweise als Erdleitung ausgeführt sein, um das Stadtbild nicht zu beeinträchtigen. Im Falle kleinerer Wärmeverteilnetze, beispielsweise auf einem Betriebsgelände, können die Leitungen selbstverständlich auch oberirdisch verlegt sein. Die Vorlaufleitung 51 und die Rücklaufleitung 52 können in an sich bekannter Weise mit einer Dämmung versehen werden, um Wärmeverluste zu reduzieren. Daneben können die Leitungen optional als koaxiale Mantelleitungen verlegt sein oder innerhalb eines gemeinsamen Rohres geführt sein.

Innerhalb der Leitungen 51 und 52 zirkuliert ein Wärmeträger. Dieser kann in einigen Ausführungsformen flüssig sein, beispielsweise ein Heizwasser. Erwärmter Wärmeträger wird dem zumindest einen Verbraucher 1 über die Vorlaufleitung 51 zugeführt. Dort wird dem Wärmeträger Wärme entnommen. Der auf diese Weise abgekühlte Wärmeträger wird der Rücklaufleitung 52 zugeführt. Von dort gelangt der Wärmeträger wieder zu einer Wärmequelle, um erneut erwärmt zu werden. In gleicher Wiese können weitere, nicht dargestellte Verbraucher an die Leitungen 51 und 52 angeschlossen sein.

In zumindest einem ersten Betriebszustand ist innerhalb der Heizstation 55 das Bypassventil 56 geschlossen und das Absperrventil 57 geöffnet. Durch eine Förderpumpe 58 innerhalb der Heizstation 55 kann flüssiger Wärmeträger über die Vorlaufleitung 51 dem Verbraucher 1 zugeführt werden. Abgekühlter Wärmeträger verlässt die Verbraucher über die Rücklaufleitung 52 und strömt zurück zur Heizstation 55. Dort wird mit einer Wärmequelle 551 der Wärmeträger wieder auf die Vorlauftemperatur erwärmt.

Die Wärmequelle 551 kann beispielsweise ein Heizkessel, eine Solaranlage oder ein Heizkraftwerk sein. In anderen Ausführungsformen der Erfindung kann die Wärmequelle 551 Abwärme eines industriellen Prozesses für Heizzwecke nutzbar machen.

Innerhalb des ersten Verbrauchers 1 ist bei diesem Betriebszustand das Bypassventil 12 geschlossen und das Absperrventil 13 geöffnet. Somit strömt der flüssige Wärmeträger von der Vorlaufleitung 51 in den optionalen Speicher 11 und von dort zurück in die Rücklaufleitung 52. Der optionale Speicher 11 kann Wärme speichern, um diese zu einem späteren Zeitpunkt zu nutzen. Gleichzeitig kann die Wärme des Speichers 11 auch sofort zur Raumheizung oder Brauchwassererwärmung eines Gebäudes verwendet werden. Der Speicher 11 kann hierzu beispielsweise ein isoliertes Gefäß enthalten oder daraus bestehen, so dass dort flüssiger Wärmeträger gespeichert werden kann. In anderen Ausführungsformen der Erfindung kann der Speicher 11 ein Latentwärmespeicher sein oder einen solchen enthalten, welcher beispielsweise den Fest/Flüssig-Phasenübergang eines Salzhydrates zur Wärmespeicherung ausnutzt.

Durch optionale Temperatursensoren 15 und 115 kann die Vorlauftemperatur und die Speichertemperatur bestimmt werden. Diese Werte können nachfolgend zur Steuerung des Verbrauchers 1 herangezogen werden. Beispielsweise kann der Wärmeträger in der Vorlaufleitung 51 abkühlen, wenn die Heizstation 55 aus Gründen der Energieersparnis abgeschaltet wird. Bei Wiederinbetriebnahme wird sodann zunächst kalter Wärmeträger 51 an die Verbraucher geliefert. Dieser kann zum Austrag von Wärme aus dem Speicher 11 führen.

Um unerwünschte Wärmeverluste zu vermeiden, kann zu Beginn der Wiederinbetriebnahme des Wärmeverteilnetzes 5 das Absperrventil 13 geschlossen und das Bypassventil 12 geöffnet werden. In diesem Fall wird kalter Wärmeträger aus der Vorlaufleitung 51 unter Umgehung des Speichers 11 unmittelbar der Rücklaufleitung 52 zugeführt. Wenn der Temperatursensor 15 erkennt, dass über die Vorlaufleitung 51 Wärme geliefert wird, kann das Bypassventil 12 geschlossen und das Absperrventil 13 geöffnet werden, um die Wärme dem Speicher 11 zuzuführen, wie vorstehend beschrieben. In einigen Ausführungsformen von der Erfindung kann dies dann der Fall sein, wenn die Vorlauftemperatur am Temperatursensor 15 höher ist als die Speichertemperatur am Sensor 115.

Wenn während der Stillstandszeiten der Heizstation 55 einer der Verbraucher Wärme benötigt, so wird erfindungsgemäß vorgeschlagen, die benötigte Wärmemenge zu berechnen und über die Steuer- bzw. Regeleinrichtung 6 an die Heizstation 55 zu melden. Die Steuer- bzw. Regeleinrichtung 6 kann die benötigte Wärmemenge um Leitungs- bzw. Transportverluste erhöhen. Diese können sich aus der Leitungslänge zwischen Heizstation 55 und Verbraucher 1, der Außentemperatur, der Wärmedämmung der Vorlaufleitung 51 und der Temperatur des Vorlaufs ergeben.

Sodann wird in einem ersten Verfahrensschritt eine erste vorgebbare Menge eines Wärmeträgers aus der Rücklaufleitung über die Vorlaufleitung zum Verbraucher gefördert, wobei dem Wärmeträger eine erste Wärmemenge zugeführt wird. Hierzu verwendet die Heizstation 55 die Wärmequelle 551 und die Pumpe 58. Aus der Temperatur des Wärmeträgers und der geförderten Menge lässt sich die abgegebene Wärmemenge bestimmen. Hierzu steht ein Wärmemengenmesser 59 in der Heizstation 55 zur Verfügung.

Aufgrund der vorangegangenen Stillstandszeit des Wärmeverteilnetzes 5 ist der Wärmeträger in der Vorlaufleitung 51 abgekühlt. Dieser abgekühlte Wärmeträger wird nun vom nachströmenden Wärmeträger durch die Wirkung der Pumpe 58 verdrängt und dem Verbraucher 1 zugeführt. Der abgekühlte Wärmeträger strömt durch das Bypassventil 12 in die Rücklaufleitung 52. Hierdurch wird vermieden, dass durch Zufuhr kalten Wärmeträgers die noch im Speicher 11 des Verbrauchers 1 verbliebene Restwärme ausgespeichert wird und verloren geht.

Sobald die gelieferte Wärmemenge den vorab bestimmten Sollwert erreicht hat, wird der erste Verfahrensschritt beendet.

Im Anschluss daran wird in einem zweiten Verfahrensschritt eine zweite vorgebbare Menge des Wärmeträgers aus der Rücklaufleitung über die Vorlaufleitung zum Verbraucher gefördert, wobei dem Wärmeträger eine zweite, geringere Wärmemenge zugeführt wird. Beispielsweise kann hierzu ein Brenner der Wärmequelle 551 der Heizzstation 55 abgeschaltet werden. Alternative kann die zweite Wärmemenge kann auch null sein, d.h. der Wärmeträger aus der Rücklaufleitung wird ohne Wärmezufuhr in die Vorlaufleitung gefördert. Hierzu kann das Bypassventil 56 geöffnet und das Absperrventil 57 geschlossen werden, um den Wärmeträger mit der Pumpe 58 zu fördern. Sobald der Temperatursensor 15 im Verbraucher 1 erkennt, dass die Vorlauftemperatur unter einen vorgebbaren Schwellenwert sinkt, wird der zweite Verfahrensschritt durch Abschalten der Pumpe 58 in der Heizstation 55 beendet.

Dieses Merkmal hat die Wirkung, dass anders als bei bekannten Wärmeverteilnetzen am Ende der Wärmelieferung kein warmer Wärmeträger ungenutzt in der Vorlaufleitung verbleibt und dadurch der Wirkungsgrad des Wärmeverteilnetzes steigt. Da die Vorlauftemperatur ausgehend von einem niedrigen Niveau zu Beginn der Wärmelieferung auf ein höheres Niveau im ersten Verfahrensschritt ansteigt und dann im zweiten Verfahrensschritt wieder abfällt, kann die Wärmelieferung an den Verbraucher auch als Wärmepuls bezeichnet werden.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Aus-führungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Wärmeverteilnetz (5) mit zumindest einer Vorlaufleitung (51) und zumindest einer Rücklaufleitung (52) und mit zumindest einem Verbraucher (1) und zumindest einer Heiz- oder Kühlstation (55), **dadurch gekennzeichnet, dass** der Verbraucher (1) eine Einrichtung zur Erfassung eines Wärmebedarfs enthält, welche dazu eingerichtet ist, den Wärmebedarf an die Heiz- oder Kühlstation (55) zu melden, wobei diese dazu eingerichtet ist, in einem ersten Verfahrensschritt eine erste vorgebbare Menge eines Wärmeträgers aus der Rücklaufleitung (52) über die Vorlaufleitung (51) zum Verbraucher (1) zu fördern, wobei dem Wärmeträger eine erste Wärmemenge zugeführt oder entnommen wird und im Anschluss daran in einem zweiten Verfahrensschritt eine zweite vorgebbare Menge des Wärmeträgers aus der Rücklaufleitung (52) über die Vorlaufleitung (51) zum Verbraucher (1) zu fördern, wobei dem Wärmeträger eine zweite, geringere Wärmemenge zugeführt oder entnommen wird.

2. Wärmeverteilnetz nach Anspruch 1, **dadurch gekennzeichnet, dass** die Heiz- oder Kühlstation (55) zumindest ein Bypassventil (56) enthält mit welchem die Rücklaufleitung (52) und die Vorlaufleitung (51) verbindbar sind, wobei das Bypassventil (56) dazu eingerichtet ist, im ersten Verfahrensschritt geschlossen und im zweiten Verfahrensschritt geöffnet zu werden.

3. Wärmeverteilnetz nach Anspruch 1 oder 2, weiterhin enthaltend eine Steuer- oder Regeleinrichtung (6) welche dazu eingerichtet ist, elektrische Signale zu erzeugen, mit welchen der Betriebszustand des Verbrauchers (1) und der Heiz- oder Kühlstation (55) beeinflussbar sind.

4. Wärmeverteilnetz nach einem der Ansprüche 1 bis 3, **dadurch gekennzeichnet, dass** die Heiz- oder Kühlstation (55) einen Wärmemengenmesser (59) enthält.

5. Wärmeverteilnetz nach einem der Ansprüche 1 bis 4, **dadurch gekennzeichnet, dass** der Verbraucher (1) einen Speicher (11) enthält.

6. Verfahren zur Wärmeverteilung innerhalb eines Wärmeverteilnetzes, welches zumindest eine Vorlaufleitung (51) und zumindest eine Rücklaufleitung (52) und zumindest einen Verbraucher (1) und zumindest eine Heiz- oder Kühlstation (55) enthält, **dadurch gekennzeichnet, dass** die Heiz- oder Kühlstation (55) in einem ersten Verfahrensschritt eine erste vorgebbare Menge eines Wärmeträgers aus der Rücklaufleitung (52) über die Vorlaufleitung (51) zum Verbraucher (1) fördert, wobei dem Wärmeträger eine erste Wärmemenge zugeführt oder entnommen wird und im Anschluss daran in einem zweiten Verfahrensschritt die Heiz- oder Kühlstation (55) eine zweite vorgebbare Menge des Wärmeträgers aus der Rücklaufleitung (52) über die Vorlaufleitung (51) zum Verbraucher (1) fördert, wobei dem Wärmeträger eine zweite, geringere Wärmemenge zugeführt oder entnommen wird, wobei die erste vorgebbare Menge und/oder die Vorlauftemperatur des Wärmeträgers aus einer Wärmeanforderung des Verbrauchers (1) und optional einem Transportverlust bestimmt wird.

7. Verfahren nach Anspruch 6, **dadurch gekennzeichnet, dass** im zweiten Verfahrensschritt die Vorlauf- und die Rücklaufleitung (51, 52) über ein Bypassventil (56) verbunden sind.

8. Verfahren nach einem der Ansprüche 6 oder 7, **dadurch gekennzeichnet, dass** der Verbraucher (1) ein Bypassventil (12) und einen Temperatursensor (15) zur Messung der Vorlauftemperatur aufweist, wobei das Bypassventil (12) die Vorlaufleitung (51) mit der Rücklaufleitung (52) verbindet und das Bypassventil (12) geöffnet ist, wenn die Vorlauftemperatur unterhalb eines vorgebbaren Schwellenwertes liegt.

9. Verfahren nach einem der Ansprüche 6 bis 8, **dadurch gekennzeichnet, dass** der zweite Verfahrensschritt beendet wird, wenn die Vorlauftemperatur am Verbraucher (1) unter einen vorgebbaren Schwellenwert gefallen ist.

10. Verfahren nach einem der Ansprüche 6 bis 9, **dadurch gekennzeichnet, dass** der Betriebszustand des Verbrauchers (1) und der Heiz- oder Kühlstation (55) mit einer Steuer- oder Regeleinrichtung (6) beeinflusst wird.

11. Datenträger mit darauf gespeicherten Daten oder für die Übersendung über ein Datennetz geeignete, Daten repräsentierende Signalfolge, wobei die Daten ein Computerprogramm repräsentieren, welches ein Verfahren nach einem der Ansprüche 6 bis 9 ausführt, wenn das Computerprogramm auf einem Mikroprozessor läuft.
